# EUROPEAN PATENT SPECIFICATION

(11) **EP 4 488 157 B1**
(45) Date of publication and mention of the grant of the patent: **05.11.2025**
(21) Application number: 24175739.2
(22) Date of filing: 14.05.2024
(51) Int. Cl.: B62K 5/10, B62K 5/027, B62K 5/05, B62K 5/08, B62D 9/02

(54) **LEANING VEHICLE**
NEIGEFAHRZEUG
VÉHICULE INCLINABLE

(30) Priority: 04.07.2023 JP 2023109820
(43) Date of publication of application: 08.01.2025
(73) Proprietor: Yamaha Hatsudoki Kabushiki Kaisha, Iwata-shi, Shizuoka-ken 438-8501 (JP)
(72) Inventor: Nagata, Tatsuya, Iwata-shi, Shizuoka-ken, 438-8501 (JP)
(74) Representative: Grünecker Patent- und Rechtsanwälte PartG mbB

(56) References cited:
- EP-A1- 3 360 764
- EP-A1- 3 412 481
- WO-A1-2021/145351
- JP-A- 2011 121 424
- US-B2- 6 761 238

## Description

The present invention relates to a leaning vehicle according to the preamble of independent claim 1. Such leaning vehicle can be taken from the prior art document EP 3 360 764 A1. The leaning vehicle tilts when turning left and right.

Leaning vehicles have been known in the art that include a vehicle body capable of tilting relative to the ground, a left wheel and a right wheel, a link mechanism that links together the left wheel and the right wheel and the vehicle body, and a lock device that restrict the tilt of the vehicle body when stopped and when parked. For example, JP 2015-37928 A discloses a three-wheel vehicle that includes a front wheel, a left rear wheel, a right rear wheel, a link mechanism that supports the left rear wheel and the right rear wheel, and a swing lock device that stops the swing of a rear portion of the vehicle when parking. The three-wheel vehicle includes a balancer lever that is swingably mounted on the vehicle body. The slide lock device includes a stopper fixed to the balancer lever and a lock pin actuation mechanism fixed to the vehicle body and having a lock pin. The stopper has a plurality of mating portions. When the lock pin is fitted into a mating portion, the swing of the balancer lever is restricted. This prevents the rear portion of the vehicle body from swinging when parking.

Leaning vehicles having a motor for tilting the vehicle body are known in the art, as disclosed in JP 2023-51631 A, for example. With the leaning vehicle disclosed in JP 2023-51631 A, the motor is connected to the link mechanism. The motor drives the link mechanism to thereby tilt the vehicle body.

With a leaning vehicle having a motor for tilting the vehicle body, one may consider providing a lock device that restricts the tilt of the vehicle body when stopped and when parked. In this case, if the motor is activated while the lock mechanism is activated, excessive force may be applied to the lock mechanism.

An object of the present invention is to provide a leaning vehicle that includes a motor that tilts the vehicle body and a lock mechanism that restricts the tilt of the vehicle body, wherein excessive force is not applied to the lock mechanism even if the motor is activated while the lock mechanism is activated. According to the present invention said object is solved by a leaning vehicle having the features of independent claim 1. Preferred embodiments are laid down in the dependent claims.

A leaning vehicle disclosed herein includes: a vehicle body frame including a head pipe; a left wheel arranged leftward relative to the head pipe; a right wheel arranged rightward relative to the head pipe; a link mechanism that links together the vehicle body frame and the left wheel and the right wheel; and a lean motor that drives the link mechanism to thereby tilt the vehicle body frame. The lean motor includes a case fixed to the vehicle body frame, and a stator fixed to the case. The lean motor includes a rotating mechanism including a rotor rotatably supported on the case, a rotating shaft that is fixed to the rotor and rotates together with the rotor, and a deceleration mechanism that transmits rotation of the rotating shaft while reducing speed of rotation. The lean motor includes an output shaft connected to the deceleration mechanism and the link mechanism. The leaning vehicle includes a lock mechanism that restricts rotation of the rotating mechanism to thereby prevent the vehicle body frame from tilting.

With the leaning vehicle described above, the rotational force of the lean motor is transmitted from the rotating mechanism to the link mechanism via the output shaft. Since the rotating mechanism includes the deceleration mechanism, the decelerated rotational force is transmitted to the output shaft. The torque of the output shaft is relatively high, while the torque of the rotating mechanism is relatively low. The lock mechanism that prevents the vehicle body frame from tilting is configured to restrict the rotation of the rotating mechanism. The lock mechanism restricts the rotation upstream of the output shaft along the transmission path of the rotational force. Therefore, when the lean motor is activated while the lock mechanism is activated, the force applied to the lock mechanism is smaller than when the lock mechanism restricts the rotation downstream of the rotating mechanism along the transmission path of the rotational force. Therefore, excessive force can be prevented from being applied to the lock mechanism when the lean motor is activated while the lock mechanism is activated.

The lock mechanism is configured to restrict rotation of the rotor.

Therefore, the lock mechanism can restrict the rotation of the rotating mechanism with a smaller force. The lock mechanism can prevent the vehicle body frame from tilting with a smaller force. The force applied to the lock mechanism can be suppressed to a smaller force when the lean motor is activated while the lock mechanism is activated.

The rotor includes a plurality of recesses recessed inward in a radial direction of the rotor, and a plurality of protrusions protruding outward in the radial direction of the rotor. The recesses and the protrusions are arranged alternating with each other in a circumferential direction of the rotor. The lock mechanism includes a lock lever including a pawl that can be inserted in a recess of the rotor, and a first support shaft that swingably supports the lock lever on the case. The lock lever is configured so that the lock lever can swing between a lock position in which the pawl is inserted in the recess of the rotor and the pawl engages with the protrusion, and an unlock position in which the pawl leaves the recess of the rotor and the pawl is no longer in engagement with the protrusion.

According to the description above, the rotation of the rotor is restricted as the pawl of the lock lever engages with the protrusion of the rotor. By using a dog-type lock mechanism as described above, it is possible to more reliably restrict the rotation of the rotating mechanism. The lock mechanism can more reliably prevent the vehicle body frame from tilting.

The lock mechanism may include a first spring that urges the lock lever toward the unlock position, and a wire that pulls the lock lever toward the lock position.

Therefore, when the wire is pulled, the lock lever moves from the unlock position to the lock position, and the rotation of the rotating mechanism is restricted. When the wire is not pulled, the lock lever moves to the unlock position by the biasing force of the first spring, and the restriction of the rotation of the rotating mechanism is released. Thus, it is possible to prevent the rotation of the rotating mechanism from being restricted when the wire is not operated. It is possible to prevent the rotation of the rotating mechanism from being restricted unintentionally. Therefore, it is possible to reduce the possibility of activating the lean motor while the lock mechanism is locked.

The lock mechanism may include a cam lever that engages with the lock lever, and a second support shaft that swingably supports the cam lever on the case. A cam groove may be formed on one of the lock lever and the cam lever, and a slide pin slidably inserted in the cam groove may be provided on the other one of the lock lever and the cam lever. The first spring may urge the cam lever in a first rotation direction around the second support shaft. The wire may be configured to exert a force in a second rotation direction, which is opposite to the first rotation direction, on the cam lever when the wire is pulled. The cam groove and the slide pin may be configured so that a distance from a center position of the first support shaft to a contact position between the cam groove and the slide pin decreases as the cam lever rotates in the first rotation direction and increases as the cam lever rotates in the second rotation direction.

Since the lock lever swings around the first support shaft, the farther from the center of the first support shaft the position at which force is applied to the lock lever from the cam lever (i.e., the contact position between the cam groove and the slide pin), the greater torque can be generated on the lock lever. According to the description above, when the lock is released (i.e., when the pawl of the lock lever is fitted into the recess of the rotor), the distance from the center position of the first support shaft to the contact position between the cam groove and the slide pin is relatively large. Therefore, the first spring can generate a relatively large torque to the lock lever in the direction of releasing the lock. Thus, it is possible to desirably release the lock. On the other hand, when the lock mechanism is locked (i.e., when the pawl of the lock lever is spaced apart from the recess of the rotor), the distance from the center position of the first support shaft to the contact position between the cam groove and the slide pin is relatively small. Therefore, unless a relatively large tensile force is applied to the wire, it is not possible to rotate the lock lever toward the lock position. Thus, it is possible to more reliably prevent the rotation of the rotating mechanism from being restricted unintentionally.

The lock mechanism may include a second spring that is connected to the cam lever and urges the cam lever in the second rotation direction.

When locking the lock mechanism, the pawl of the lock lever may not be inserted into the recess of the rotor but may ride up on the protrusion. That is, a so-called misaligned dog contact may occur. According to the description above, if the pawl of the lock lever rides up on the protrusion, the second spring deforms elastically. Since the pawl is merely pressed against the protrusion by the elastic force of the second spring, the pawl can slide on the protrusion as the rotor rotates, and the pawl eventually fits into the recess. Therefore, even if a misaligned dog contact occurs temporarily, the pawl thereafter fits into the recess as the rotor rotates, thereby desirably achieving the lock.

The lock mechanism is not limited to those that restrict the rotation of the rotor. The deceleration mechanism may include a plurality of gears, and the lock mechanism may be configured to restrict rotation of one of the plurality of gears.

### Advantageous Effects Of Invention

According to the present invention, it is possible to provide a leaning vehicle that includes a motor that tilts the vehicle body and a lock mechanism that restricts the tilt of the vehicle body, wherein excessive force is not applied to the lock mechanism even if the motor is activated while the lock mechanism is activated.

### BRIEF DESCRIPTION OF THE DRAWINGS

FIG. 1 is a left side view of a leaning vehicle according to one embodiment.
FIG. 2 is a left side view of a main part of the leaning vehicle.
FIG. 3 is a left side view of a part of a front portion of the leaning vehicle.
FIG. 4 is a front view of a part of the front portion when the leaning vehicle is standing upright.
FIG. 5 is a front view of a part of the front portion when the leaning vehicle is tilted.
FIG. 6 is a plan view of a part of the front portion of the leaning vehicle.
FIG. 7 is a vertical sectional view of a lean motor.
FIG. 8 is a cross-sectional view taken along line VIII-VIII of FIG. 7.
FIG. 9 is a cross-sectional view taken along line IX-IX of FIG. 7.
FIG. 10 is a front view of a lock mechanism.
FIG. 11 is a front view of the lock mechanism where a lock lever is in the lock position.
FIG. 12 is a front view of the lock mechanism where the lock lever is in the unlock position.
FIG. 13 is a front view of the lock mechanism where a misaligned dog contact occurs.

### DETAILED DESCRIPTION OF THE PREFERRED EMBODIMENTS

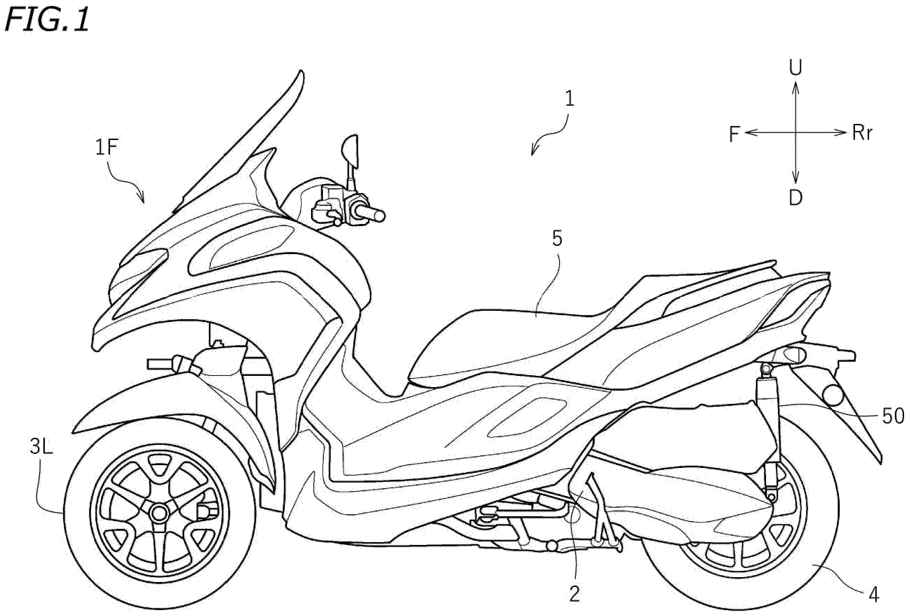

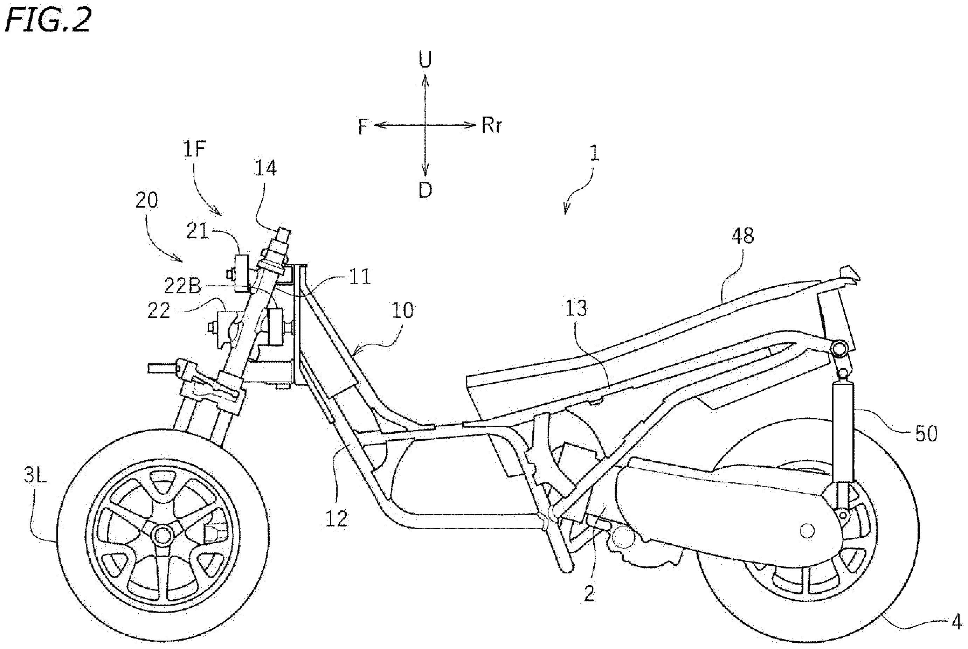

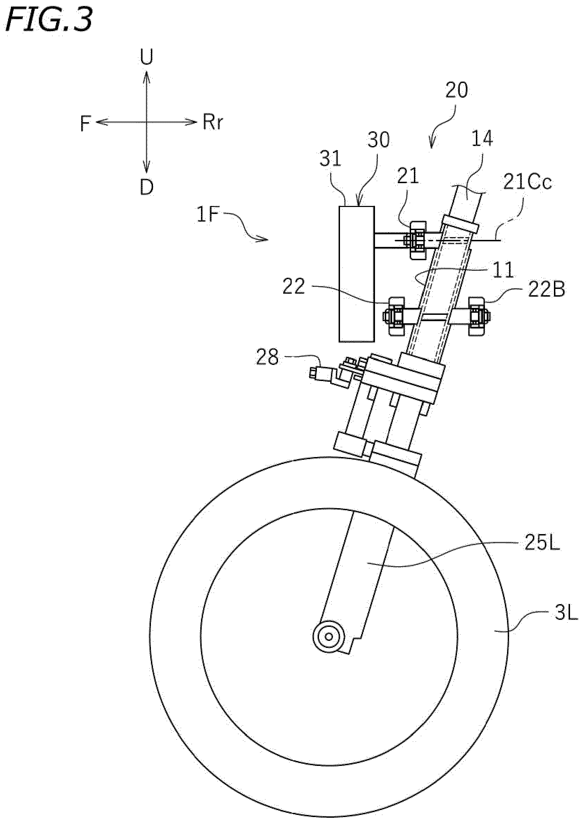

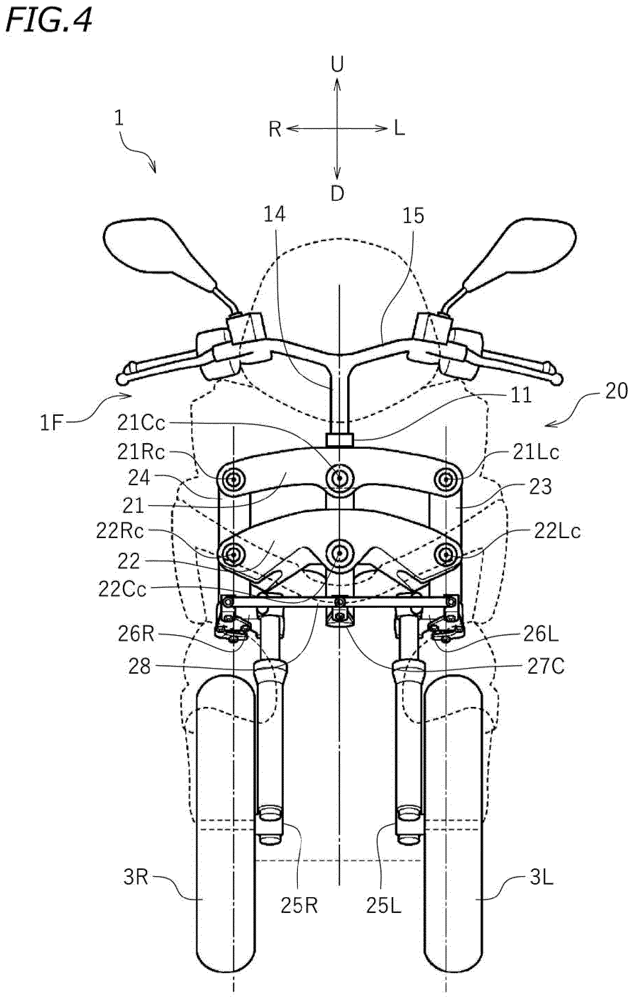

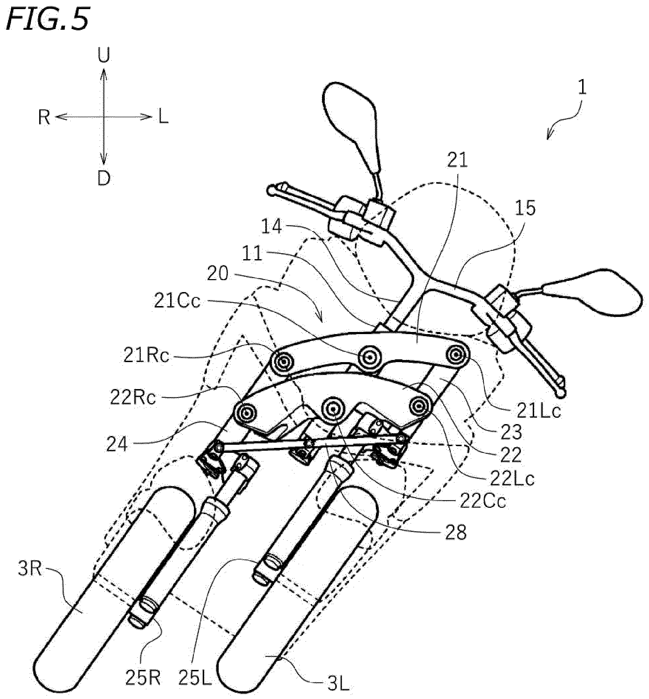

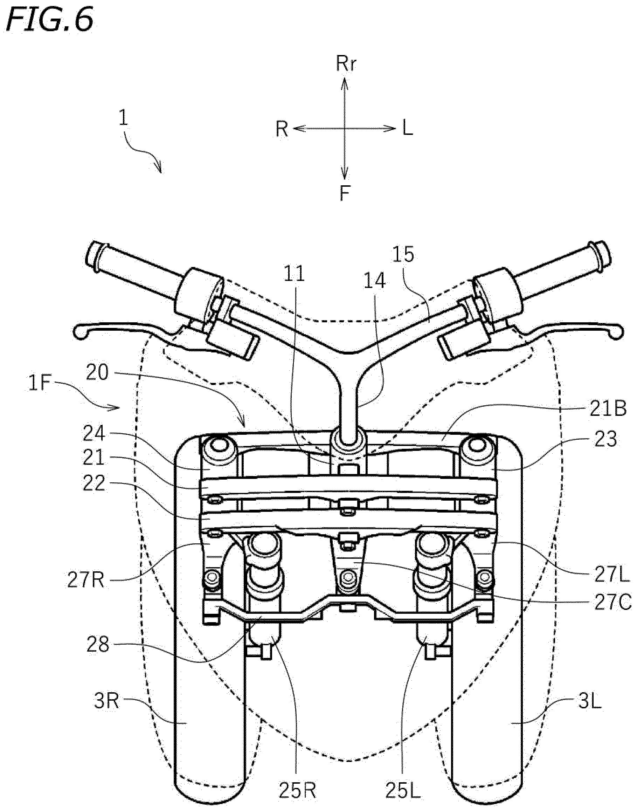

One embodiment of the leaning vehicle will now be described with reference to the drawings. FIG. 1 is a left side view of a leaning vehicle 1 according to the present embodiment. FIG. 2 is a left side view of a main part of the leaning vehicle 1. FIG. 3 is a left side view of a part of a front portion 1F of the leaning vehicle 1. FIG. 4 is a front view of a part of the front portion 1F when the leaning vehicle 1 is standing upright. FIG. 5 is a front view of a part of the front portion 1F when the leaning vehicle 1 is tilted. FIG. 6 is a plan view of a part of the front portion 1F of the leaning vehicle 1.

The terms front, rear, left, right, up and down, as used in the description below, refer to these directions as seen from a virtual rider seated on a seat 5 while the leaning vehicle 1 is standing upright (standing upright as used herein refers to a state where a vehicle body frame 10 to be described below is standing upright) on a horizontal surface with no rider and no load thereon, unless specified otherwise. The designations F, Rr, L, R, U and D, as used in the figures, refer to front, rear, left, right, up and down, respectively. The vehicle up-down direction coincides with the vertical direction. The vehicle front-rear direction is orthogonal to the vehicle up-down direction. The vehicle left-right direction is orthogonal to the vehicle front-rear direction and the vehicle up-down direction.

As shown in FIG. 1 and FIG. 2, the leaning vehicle 1 includes a vehicle body frame 10, a link mechanism 20, a left front wheel 3L, a right front wheel 3R (see FIG. 4), a rear wheel 4, a power unit 2, a seat 5 and a storage box 48. The leaning vehicle 1 is a three-wheel vehicle with two front wheels 3L, 3R and one rear wheel 4. As shown in FIG. 3, the leaning vehicle 1 includes a lean motor 30 that drives the link mechanism 20. Note that the lean motor 30 is not shown in FIG. 2, FIG. 4, FIG. 5 and FIG. 6.

As shown in FIG. 2, the vehicle body frame 10 includes a head pipe 11, a down frame 12 extending rearward and downward from the head pipe 11, and a seat frame 13 extending rearward from the down frame 12. As shown in FIG. 4, a steering shaft 14 is rotatably supported on the head pipe 11. A handle bar 15 is fixed to the steering shaft 14.

As shown in FIG. 2, the power unit 2 is swingably supported on the vehicle body frame 10. The power unit 2 is connected to the rear wheel 4 so that power can be transmitted therebetween. The power unit 2 generates driving force for traveling. The power unit 2 provides power to the rear wheel 4. The power unit 2 may include an internal combustion engine or may include an electric motor. In the present embodiment, the power unit 2 includes an internal combustion engine.

As shown in FIG. 1 and FIG. 2, the seat 5 is arranged rearward of the head pipe 11. The seat 5 is supported on the seat frame 13 of the vehicle body frame 10. Although not shown in the figures, a hinge is provided at the front end portion of the seat 5. The seat 5 is configured to be rotatable around the front end portion of the seat 5.

The storage box 48 is arranged downward of the seat 5. When the seat 5 is rotated forward, the upper side of the storage box 48 is opened so that items can be put in or out of the storage box 48. When the seat 5 is folded backward, the upper side of the storage box 48 is covered by the seat 5. The storage box 48 is supported on the seat frame 13 of the vehicle body frame 10.

The leaning vehicle 1 includes left and right suspensions 50. The left rear suspension 50 is arranged leftward of the rear wheel 4, and the right rear suspension 50 is arranged rightward of the rear wheel 4.

As shown in FIG. 4, the link mechanism 20 is a parallelogram link-type link mechanism. The link mechanism 20 is arranged upward relative to the left front wheel 3L and the right front wheel 3R. The link mechanism 20 includes an upper arm 21, a lower arm 22, a left side member 23 and a right side member 24.

The upper arm 21 and the lower arm 22 extend leftward and rightward. The lower arm 22 is arranged downward of the upper arm 21. The upper arm 21 and the lower arm 22 are arranged forward of the head pipe 11 (see FIG. 2). The upper arm 21 is supported on the head pipe 11 so that the upper arm 21 can rotate around the first axis 21Cc extending in the vehicle front-rear direction. The lower arm 22 is supported on the head pipe 11 so that the lower arm 22 can rotate around the second axis 22Cc extending in the vehicle front-rear direction.

In the present embodiment, as shown in FIG. 2, another lower arm 22B is arranged rearward of the head pipe 11. The lower arm 22B extends leftward and rightward. The lower arm 22B is arranged downward of the upper arm 21. As with the lower arm 22, the lower arm 22B is supported on the head pipe 11 so that the lower arm 22B can rotate around the second axis 22Cc extending in the vehicle front-rear direction. Note that another upper arm may be arranged rearward of the head pipe 11, this other upper arm being supported on the head pipe 11 so that it can rotate around the first axis 21Cc. Note however that the other upper arm and the other lower arm 22B arranged rearward of the head pipe 11 are optional.

As shown in FIG. 4, the left side member 23 and the right side member 24 extend upward and downward. The left side member 23 is arranged leftward of the head pipe 11, and the right side member 24 is arranged rightward of the head pipe 11. The right side member 24 is arranged rightward of the left side member 23. The left side member 23 and the right side member 24 are arranged rearward of the upper arm 21 and the lower arm 22. The left side member 23 and the right side member 24 are arranged forward of the lower arm 22B. The left side member 23 and the right side member 24 are rotatably supported on the upper arm 21, the lower arm 22 and the lower arm 22B.

Specifically, the upper end portion of the left side member 23 is supported on the left end portion of the upper arm 21 so that the left side member 23 is rotatable around the third axis 21Lc extending in the vehicle front-rear direction. The lower end portion of the left side member 23 is supported on the left end portion of the lower arm 22 and the left end portion of the lower arm 22B so that the left side member 23 is rotatable around the fourth axis 22Lc extending in the vehicle front-rear direction. The upper end portion of the right side member 24 is supported on the right end portion of the upper arm 21 so that the right side member 24 is rotatable around the fifth axis 21Rc extending in the vehicle front-rear direction. The lower end portion of the right side member 24 is supported on the right end portion of the lower arm 22 and the right end portion of the lower arm 22B so that the right side member 24 is rotatable around the sixth axis 22Rc extending in the vehicle front-rear direction.

The leaning vehicle 1 includes, as front suspensions, a left suspension 25L and a right suspension 25R. In the present embodiment, the left suspension 25L and the right suspension 25R are telescopic suspensions. The upper end portion of the left suspension 25L and the upper end portion of the right suspension 25R are connected to the link mechanism 20. The lower end portion of the left suspension 25L is connected to the left front wheel 3L, and the lower end portion of the right suspension 25R is connected to the right front wheel 3R. Specifically, the upper end portion of the left suspension 25L is connected to the lower end portion of the left side member 23 via the left bracket 26L. The upper end portion of the left suspension 25L is connected to the left side member 23 so that the left suspension 25L is rotatable in the left-right direction of the vehicle body frame 10. The upper end portion of the right suspension 25R is connected to the lower end portion of the right side member 24 via the right bracket 26R. The upper end portion of the right suspension 25R is connected to the right side member 24 so that the right suspension 25R is rotatable in the left-right direction of the vehicle body frame 10.

A center plate 27C is fixed to the lower end portion of the steering shaft 14. As shown in FIG. 6, the center plate 27C extends forward from the steering shaft 14. A left plate 27L is fixed to the left bracket 26L. A right plate 27R is fixed to the right bracket 26R. The left plate 27L, the center plate 27C and the right plate 27R are connected to a tie rod 28 so as to be rotatable left and right. The steering shaft 14 is linked to the left side member 23 and the right side member 24 via the center plate 27C, the tie rod 28, the left plate 27L and the right plate 27R.

As described above, the leaning vehicle 1 includes the lean motor 30 (see FIG. 3). The lean motor 30 drives the link mechanism 20 to thereby cause the vehicle body frame 10 to tilt or stand upright. With the lean motor 30, it is possible to adjust the rotation angle of the upper arm 21 and the lower arm 22 relative to the vehicle body frame 10. Thus, it is possible to control the roll angle of the vehicle body frame 10. The lean motor 30 is configured to apply a torque to at least one of the upper arm 21 and the lower arm 22. The lean motor 30 is connected to at least one of the upper arm 21 and the lower arm 22 and to the vehicle body frame 10. In the present embodiment, the lean motor 30 is connected to the upper arm 21 and the head pipe 11.

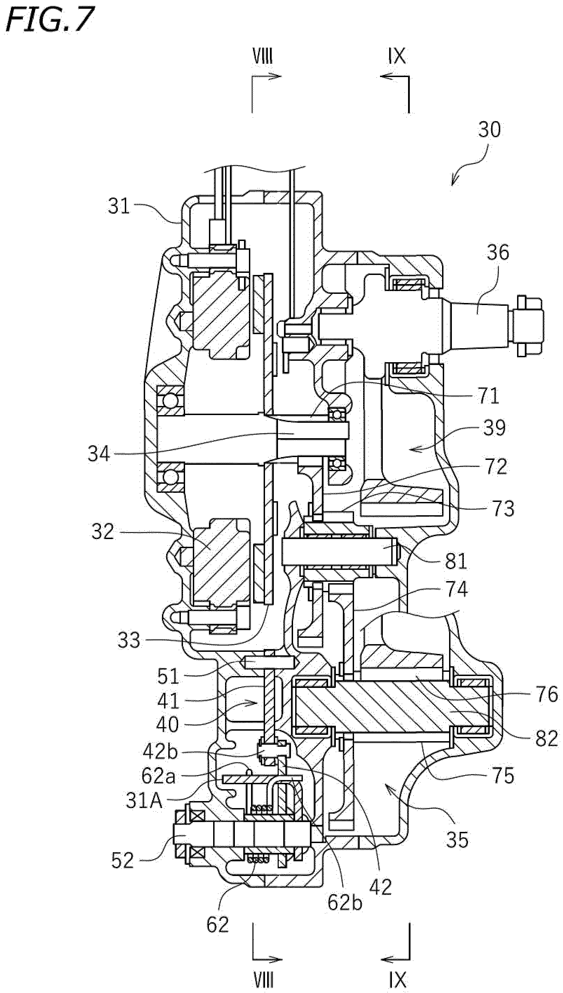

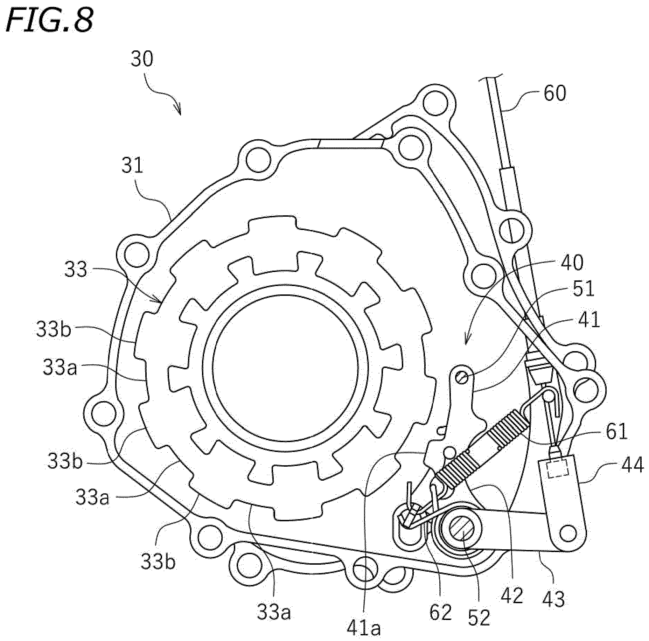

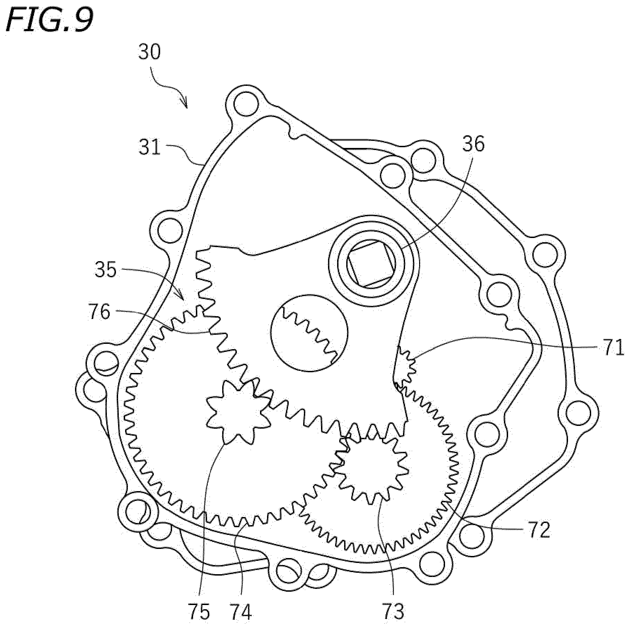

FIG. 7 is a vertical sectional view of the lean motor 30. FIG. 8 is a cross-sectional view taken along line VIII-VIII of FIG. 7. FIG. 9 is a cross-sectional view taken along line IX-IX of FIG. 7. Next, the configuration of the lean motor 30 will be described.

As shown in FIG. 7, the lean motor 30 includes a case 31 fixed to the vehicle body frame 10, a stator 32 fixed to the case 31, a rotor 33 rotatably supported on the case 31, a rotating shaft 34 fixed to the rotor 33, a deceleration mechanism 35 that transmits the rotation of the rotating shaft 34 while reducing the speed of rotation, and an output shaft 36 connected to the deceleration mechanism 35. The rotor 33 can rotate in both directions. The rotating shaft 34 rotates together with the rotor 33. The rotor 33, the rotating shaft 34 and the deceleration mechanism 35 together form a rotating mechanism 39 that rotates. The output shaft 36 is a shaft for outputting the torque of the lean motor 30, and is connected to the link mechanism 20. The output shaft 36 is linked to the upper arm 21, for example.

The deceleration mechanism 35 is composed of a plurality of gears. Here, the deceleration mechanism 35 includes a first gear 71, a second gear 72, a third gear 73, a fourth gear 74, a fifth gear 75 and a sixth gear 76.

The first gear 71 is formed on the rotating shaft 34. The first gear 71 is included in the rotating shaft 34.

The second gear 72 is rotatably supported on a shaft 81 fixed to the case 31. The second gear 72 meshes with the first gear 71. The radius of the second gear 72 is larger than the radius of the first gear 71 (see FIG. 9).

The third gear 73 is rotatably supported on the shaft 81. The third gear 73 and the second gear 72 are arranged coaxially. The third gear 73 rotates together with the second gear 72. The radius of the third gear 73 is smaller than the radius of the second gear 72 (see FIG. 9).

The fourth gear 74 is fixed to a shaft 82 rotatably supported on the case 31. The fourth gear 74 meshes with the third gear 73. The radius of the fourth gear 74 is larger than the radius of the third gear 73 (see FIG. 9).

The fifth gear 75 is formed on the shaft 82. The fifth gear 75 is included in the shaft 82. The fifth gear 75 and the fourth gear 74 are arranged coaxially. The fifth gear 75 rotates together with the fourth gear 74. The radius of the fifth gear 75 is smaller than the radius of the fourth gear 74 (see FIG. 9).

The sixth gear 76 is formed on the output shaft 36. The sixth gear 76 is included in the output shaft 36. The sixth gear 76 meshes with the fifth gear 75. The radius of the sixth gear 76 is larger than the radius of the fifth gear 75 (see FIG. 9).

Note that the radius of a gear, as used herein, refers to the distance from the center of rotation of the gear to the tip of the teeth of the gear. Although the first to fifth gears 71 to 75 are generally circular gears and the sixth gear 76 is a generally arc-shaped gear as shown in FIG. 9, there is no particular limitation on the shapes of the gears.

The deceleration mechanism 35 transmits the rotation of the rotating shaft 34 to the output shaft 36 while reducing the speed of rotation. Here, the deceleration mechanism 35 transmits the rotation of the rotating shaft 34 to the output shaft 36 while reducing the speed in six steps. The speed of rotation decreases in the order of the first gear 71, the second gear 72, the third gear 73, the fourth gear 74, the fifth gear 75 and the sixth gear 76. The torque of rotation increases in the order of the first gear 71, the second gear 72, the third gear 73, the fourth gear 74, the fifth gear 75 and the sixth gear 76.

As described above, since the leaning vehicle 1 includes the lean motor 30, it is possible to control the roll angle when the leaning vehicle 1 is traveling and when the leaning vehicle 1 is stopped. For example, the leaning vehicle 1 can execute a self-stand control as follows.

The self-stand control is a control of maintaining the vehicle body frame 10 standing upright while the leaning vehicle 1 is stopped waiting for the light, for example. For example, if the rider shifts the weight leftward while the leaning vehicle 1 is stopped, a force tilting leftward is applied to the vehicle body frame 10. Thus, the vehicle body frame 10 tilts leftward (see FIG. 5). Although not shown in the figures, the leaning vehicle 1 includes an IMU as a sensor that detects the tilt of the vehicle body frame 10, and a control device that controls the lean motor 30 by receiving a signal from the IMU. During execution of the self-stand control, if the control device detects a tilt of the vehicle body frame 10, the control device controls the lean motor 30 so as to eliminate the tilt. Specifically, the control device controls the lean motor 30 so that the roll angle of the vehicle body frame 10 becomes zero.

The leaning vehicle 1 also includes a lock mechanism 40 that prevents the vehicle body frame 10 from tilting by restricting the rotation of the rotating mechanism 39. Even without the self-stand control as described above, the leaning vehicle 1 can be kept standing by itself as the lock mechanism 40 prevents the vehicle body frame 10 from tilting. Even without activating the lean motor 30 when stopped, it is possible to maintain the leaning vehicle 1 in an upright position without the rider placing their feet on the ground. The leaning vehicle 1 can be parked in an upright position as the lock mechanism 40 prevents the vehicle body frame 10 from tilting. Note that the term stopped as used herein refers to the leaning vehicle 1 stopped while the main power source of the leaning vehicle 1 is ON. The term parked refers to the leaning vehicle 1 stopped while the main power source is OFF. Next, the configuration of the lock mechanism 40 will be described.

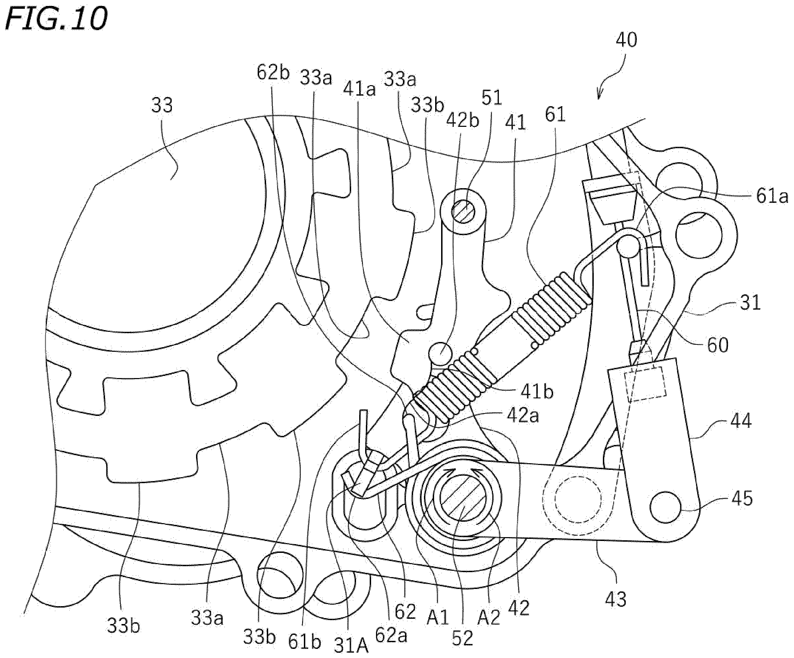

In the present embodiment, the lock mechanism 40 is configured to restrict the rotation of the rotor 33. As shown in FIG. 10, the lock mechanism 40 includes a lock lever 41, a first support shaft 51 that supports the lock lever 41 so that the lock lever 41 can swing relative to the case 31, a cam lever 42 that engages with the lock lever 41, a second support shaft 52 that supports the cam lever 42 so that the cam lever 42 can swing relative to the case 31, a first spring 61, a second spring 62 and a wire 60.

As shown in FIG. 8, the rotor 33 includes a plurality of recesses 33a recessed inward in the radial direction of the rotor 33, and a plurality of protrusions 33b protruding outward in the radial direction of the rotor 33. The recesses 33a and the protrusions 33b are arranged alternating with each other in the circumferential direction of the rotor 33.

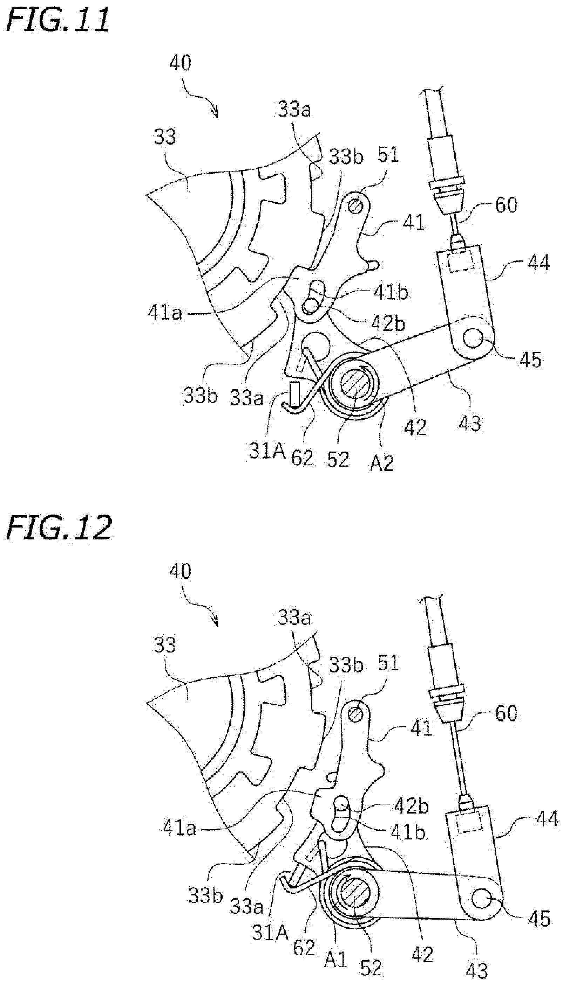

As shown in FIG. 10, the lock lever 41 includes a pawl 41a that can be inserted in the recess 33a of the rotor 33. The lock lever 41 is supported on the first support shaft 51 so that the lock lever 41 can swing between the lock position (see FIG. 11) and the unlock position (see FIG. 12). As shown in FIG. 11, the lock position is a position in which the pawl 41a is inserted in the recess 33a of the rotor 33 and the pawl 41a engages with the protrusion 33b in the circumferential direction. As the pawl 41a engages with the protrusion 33b, the rotation of the rotor 33 is restricted. As shown in FIG. 12, the unlock position is a position in which the pawl 41a leaves the recess 33a of the rotor 33 and the pawl 41a is no longer in engagement with the protrusion 33b. When the lock lever 41 is in the unlock position, the rotor 33 is rotatable.

A cam groove 41b is formed on the lock lever 41. The cam lever 42 is provided with a slide pin 42b slidably inserted in the cam groove 41b. As the slide pin 42b and the cam groove 41b are engaged together, the lock lever 41 and the cam lever 42 are linked together.

The first spring 61 is a spring that urges the lock lever 41 toward the unlock position. While there is no particular limitation on the type of the first spring 61, here it is a coil spring. The first end portion 61a of the first spring 61 is fastened to the case 31. The second end portion 61b of the first spring 61 is fastened to the cam lever 42. The first spring 61 urges the cam lever 42 in the first rotation direction A1 around the second support shaft 52. The first spring 61 indirectly urges the lock lever 41 toward the unlock position with the cam lever 42 therebetween. Note however that the first spring 61 may directly urge the lock lever 41.

The second spring 62 is a spring that urges the cam lever 42 in the second rotation direction A2. While there is no particular limitation on the type of the second spring 62, here it is a torsion spring. The second spring 62 is fitted into the second support shaft 52. The first end portion 62a of the second spring 62 is fastened to a fastening member 31a fixed to the case 31. The first end portion 62a of the second spring 62 is fixed to the case 31 with the fastening member 31A therebetween. The second end portion 62b of the second spring 62 is fastened to the cam lever 42. Here, a hole 42a is formed in the cam lever 42. The second end portion 62b of the second spring 62 is fastened to the edge of the hole 42a.

A link lever 43 is fixed to the cam lever 42. The link lever 43 is swingably supported on the second support shaft 52. The link lever 43 swings around the second support shaft 52 together with the cam lever 42. A link lever 44 is linked to the link lever 43. The link lever 43 and the link lever 44 are linked together by a link shaft 45. The link lever 44 is rotatable relative to the link lever 43.

The first end portion of the wire 60 is connected to the link lever 44. The tensile force of the wire 60 is transmitted to the lock lever 41 via the link lever 44, the link lever 43 and the cam lever 42. When the wire 60 is not pulled, the lock lever 41 is held in the unlock position by the bias force of the first spring 61 (see FIG. 12). When the wire 60 is pulled, the link lever 44 moves upward in FIG. 12, and the link lever 43 and the cam lever 42 rotate in the second rotational direction A2 (see FIG. 11). Note that the second rotational direction A2 is the opposite direction from the first rotational direction A1. Thus, the wire 60 is configured to exert a force in the second rotational direction A2 on the cam lever 42 when pulled. When the cam lever 42 rotates in the second rotational direction A2, the slide pin 42b moves downward in FIG. 12 in the cam groove 41b, and the lock lever 41 rotates around the first support shaft 51 toward the lock position (see FIG. 11). The wire 60 is configured to pull the lock lever 41 toward the lock position via the link lever 44, the link lever 43 and the cam lever 42. In the present embodiment, the wire 60 is configured to indirectly pull the lock lever 41 toward the lock position. Note however that the wire 60 may be configured to directly pull the lock lever 41 toward the lock position.

The wire 60 may be manually operated or may be automatically operated. Although not shown in the figures, the second end portion of the wire 60 is connected to a lock operation device. The lock operation device may be a lever that is manually operated by the rider. The lock operation device may be a device that pulls the wire 60 by an actuator such as a motor or a solenoid. Hereinafter, the wire 60 being pulled by the lock operation device will be referred to as "the wire 60 being operated". The wire 60 not being pulled by the lock operation device will be referred to as "the operation of the wire 60 being released".

As described above, when the wire 60 is operated, the cam lever 42 rotates in the second rotation direction A2, and the slide pin 42b moved downward in FIG. 12 in the cam groove 41b. On the other hand, when the operation of the wire 60 is released, the lock lever 41 moves from the lock position to the unlock position by the biasing force of the first spring 61. In this case, the slide pin 42b moves upward in FIG. 11 in the cam groove 41b. The lock lever 41 rotates around the first support shaft 51 toward the unlock position. Thus, the cam groove 41b and the slide pin 42b are configured so that the distance from the center position of the first support shaft 51 to the contact position between the cam groove 41b and the slide pin 42b decreases as the cam lever 42 rotates in the first rotational direction A1 and increases as the cam lever 42 rotates in the second rotational direction A2.

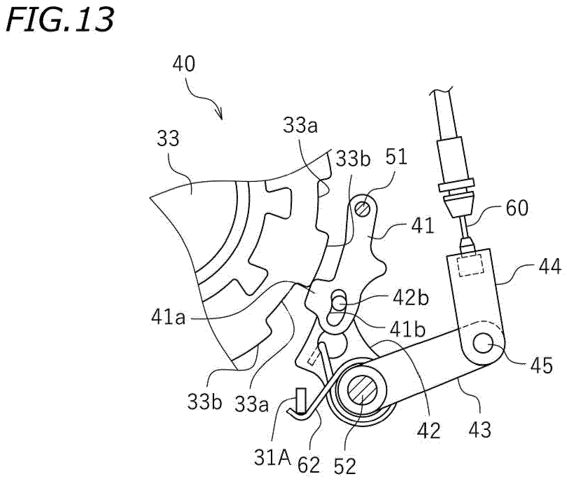

The lock mechanism 40 is configured as described above. Thus, the lock mechanism 40 inserts the pawl 41a of the lock lever 41 into the recess 33a of the rotor 33 and engages the pawl 41a with the protrusion 33b, thereby restricting the rotation of the rotor 33. The lock mechanism 40 is a so-called dog-type lock mechanism. Compared to a friction-type lock mechanism, a dog-type lock mechanism tends to restrict the rotation more reliably with a smaller force. On the other hand, a so-called misaligned dog contact may occur with a dog-type lock mechanism. Specifically, when the lock lever 41 moves from the unlock position to the lock position, depending on the rotational position of the rotor 33, the pawl 41a of the lock lever 41 may not fit into the recess 33a of the rotor 33 and may be pressed against the outer circumference of the protrusion 33b with relatively large force (see FIG. 13). In this case, the wire 60 cannot be pulled to a predetermined position. The rotation of the rotor 33 may stop due to friction between the pawl 41a and the protrusion 33b while the pawl 41a of the lock lever 41 is not fitted in the recess 33a of the rotor 33. That is, the rotation of the rotor 33 will be unstably restricted while the operation of the wire 60 is not completed.

However, the lock mechanism 40 according to the present embodiment includes the second spring 62. As shown in FIG. 13, even if the pawl 41a of the lock lever 41 contacts the outer circumference of the protrusion 33b of the rotor 33 when the wire 60 is operated, it is possible to pull the wire 60 to the predetermined position as the second spring 6 twists. Even if a misaligned dog contact occurs, the operation of the wire 60 can be completed. When a misaligned dog contact occurs, the force pressing the pawl 41a of the lock lever 41 against the outer circumference of the protrusion 33b of the rotor 33 is the elastic force of the second spring 62. The force pressing the pawl 41a against the outer circumference of the protrusion 33b is relatively small. Therefore, the rotor 33 can rotate even if a misaligned dog contact occurs. As the rotor 33 rotates, the pawl 41a slides on the outer circumference of the protrusion 33b and eventually fits into the recess 33a. Thus, the rotation of the rotor 33 can be stably restricted.

As described above, the leaning vehicle 1 according to the present embodiment includes the lock mechanism 40 for preventing the vehicle body frame 10 from tilting. Therefore, the vehicle body frame 10 can be kept upright when the lean motor 30 is stopped.

Now, when the lean motor 30 is activated when the lock mechanism 40 is activated, the driving force of the lean motor 30 is transmitted to the lock mechanism 40. In this case, it is desirable that no excessive force be applied to the lock mechanism 40. With the leaning vehicle 1 according to the present embodiment, the rotational force of the lean motor 30 is transmitted from the rotating mechanism 39 (see FIG. 7) to the link mechanism 20 via the output shaft 36. Since the rotating mechanism 39 includes the deceleration mechanism 35, the decelerated rotational force is transmitted to the output shaft 36. The torque of the output shaft 36 is relatively high, while the torque of the rotating mechanism 39 is relatively low. In the present embodiment, the lock mechanism 40 is configured to restrict the rotation of the rotating mechanism 39. The lock mechanism 40 restricts the rotation upstream of the output shaft 36 along the transmission path of the rotational force. Therefore, the lock mechanism 40 can prevent the vehicle body frame 10 from tilting with a relatively small force. When the lean motor 30 is activated while the lock mechanism 40 is activated, the force applied to the lock mechanism 40 is smaller than when the lock mechanism 40 restricts the rotation downstream of the rotating mechanism 39 along the transmission path of the rotational force. Therefore, excessive force can be prevented from being applied to the lock mechanism 40 when the lean motor 30 is activated while the lock mechanism 40 is activated.

The member whose rotation is restricted by the lock mechanism 40 may be any rotating member of the rotating mechanism 39. Note however that in the present embodiment, the lock mechanism 40 is configured to restrict the rotation of the rotor 33. The rotating mechanism 39 is configured to transmit rotational force while gradually decreasing the rotational speed. The rotor 33 is a rotating member that is located most upstream along the transmission path of the rotational force of the rotating mechanism 39. The rotor 33 is a rotating member of the highest rotational speed in the rotating mechanism 39. Therefore, according to the present embodiment, the lock mechanism 40 can restrict the rotation of the rotating mechanism 39 with a smaller force. The lock mechanism 40 can prevent the vehicle body frame 10 from tilting with a smaller force. The force applied to the lock mechanism 40 can be suppressed to a smaller force when the lean motor 30 is activated while the lock mechanism 40 is activated.

According to the present embodiment, the lock mechanism 40 is a dog-type lock mechanism. The lock mechanism 40 restricts the rotation of the rotor 33 by circumferentially engaging the pawl 41a of the lock lever 41 with the protrusion 33b of the rotor 33. Therefore, the lock mechanism 40 can more stably and reliably restrict the rotation of the rotating mechanism 39. The lock mechanism 40 can more stably and reliably prevent the vehicle body frame 10 from tilting.

The lock mechanism 40 according to the present embodiment includes the first spring 61 that urges the lock lever 41 toward the unlock position, and the wire 60 that pulls the lock lever 41 toward the lock position. When the wire 60 is pulled, the lock lever 41 moves from the unlock position to the lock position, and the rotation of the rotating mechanism 39 is restricted. When the wire 60 is not pulled, the lock lever 41 moves to the unlock position by the biasing force of the first spring 61, and the restriction of the rotation of the rotating mechanism 39 is released. Thus, it is possible to prevent the rotation of the rotating mechanism 39 from being restricted when the wire 60 is not operated. It is possible to prevent the rotation of the rotating mechanism 39 from being restricted unintentionally. According to the present embodiment, it is possible to reduce the possibility of unintentional activation of the lock mechanism 40 while the lean motor 30 is activated.

With the lock mechanism 40 according to the present embodiment, the lock lever 41 is linked to the cam lever 42 via the cam groove 41b and the slide pin 42b. Since the lock lever 41 swings around the first support shaft 51, the farther from the center of the first support shaft 51 the position at which force is applied to the lock lever 41 from the cam lever 42 (i.e., the contact position between the cam groove 41b and the slide pin 42b), the greater torque can be generated on the lock lever 41. The cam groove 41b and the slide pin 42b are configured so that the distance from the center position of the first support shaft 51 to the contact position between the cam groove 41b and the slide pin 42b decreases as the cam lever 42 rotates in the first rotational direction A1 and increases as the cam lever 42 rotates in the second rotational direction A2. As shown in FIG. 11, when releasing the lock of the lock mechanism 40 (i.e., when the pawl 41a of the lock lever 41 is fitted into the recess 33a of the rotor 33), the distance from the center position of the first supporting shaft 51 to the contact position between the cam groove 41b and the slide pin 42b is relatively large. Therefore, the first spring 61 can generate a relatively large torque to the lock lever 41 in the direction of releasing the lock. Thus, it is possible to desirably release the lock. As shown in FIG. 12, when locking the lock mechanism 40 (i.e., when the pawl 41a of the lock lever 41 is spaced apart from the recess 33a of the rotor 33), the distance from the center position of the first supporting shaft 51 to the contact position between the cam groove 41b and the slide pin 42b is relatively small. Therefore, unless a relatively large tensile force is applied to the wire 60, it is not possible to rotate the lock lever 41 toward the lock position. Thus, it is possible to more reliably prevent the rotation of the rotating mechanism 39 from being restricted unintentionally.

The lock mechanism 40 according to the present embodiment includes the second spring 62 which is connected to the cam lever 42 and which urges the cam lever 42 in the second rotation direction A2. When the lock lever 41 moves toward the lock position, if the pawl 41a does not fit into the recess 33a of the rotor 33 but contacts the outer circumference of the protrusion 33b, the second spring 62 deforms elastically (see FIG. 13). In this case, since the pawl 41a is merely pressed against the protrusion 33b by the elastic force of the second spring 62, the pawl 41a can slide on the protrusion 33b as the rotor 33 rotates, and the pawl 41a eventually fits into the recess 33a. Therefore, even if a misaligned dog contact occurs temporarily, the pawl 41a thereafter fits into the recess 33a as the rotor 33 rotates, and it is possible to desirably restrict the rotation of the rotor 33.

One embodiment of the leaning vehicle 1 has been described above. However, the embodiment described above is only an example, and various other embodiments are possible. Next, examples of other embodiments will be briefly described.

As described above, the member whose rotation is restricted by the lock mechanism 40 may be any rotating member of the rotating mechanism 39. For example, the lock mechanism 40 may be configured to restrict the rotation of the rotating shaft 34. The lock mechanism 40 may be configured to restrict the rotation of the deceleration mechanism 35. The lock mechanism 40 may be configured to restrict the rotation of the first gear 71, the second gear 72, the third gear 73, the fourth gear 74, the fifth gear 75 or the sixth gear 76.

In the embodiment described above, the leaning vehicle 1 includes the left front wheel 3L, the right front wheel 3R and the rear wheel 4, and the link mechanism 20 is arranged in the front part of the vehicle (see FIG. 2). However, the leaning vehicle may include a front wheel, a left rear wheel and a right rear wheel, and the link mechanism may be arranged in the rear part of the vehicle. The "left wheel" and the "right wheel" are not limited to the left front wheel 3L and the right front wheel 3R, but may also be a left rear wheel and a right rear wheel.

The "deceleration mechanism" is not limited to a mechanism composed of a plurality of gears. The "deceleration mechanism" may be a mechanism having a belt and a pulley, for example.

The "lock mechanism" only needs to be a mechanism that restricts the rotation of the rotating mechanism 39, and does not need to be a dog-type lock mechanism. The "lock mechanism" may be configured to restrict the rotation of the rotating member by inserting a pin into a hole. The "lock mechanism" may be an electrical or magnetic lock mechanism.

In the embodiment described above, the "cam groove" is the cam groove 41b formed on the lock lever 41, and the "slide pin" is the slide pin 42b provided on the cam lever 42. However, the "cam groove" may be formed on the cam lever 42, and the "slide pin" may be provided on the lock lever 41.

### Reference Signs List

1: Leaning vehicle, 3L: Left front wheel (left wheel), 3R: Right front wheel (right wheel), 10: Vehicle body frame, 11: Head pipe, 20: Link mechanism, 30: Lean motor, 31: Case, 32: Stator, 33: Rotor, 33a: Recess, 33b: Protrusion, 34: Rotating shaft, 35: Deceleration mechanism, 36: Output shaft, 39: Rotating mechanism, 40: Lock mechanism, 41: Lock lever, 41a: Pawl, 41b: Cam groove, 42: Cam lever, 42b: Slide pin, 51: First support shaft, 52: Second support shaft, 60: Wire, 61: First spring, 62: Second spring, 71: First gear, 72: Second gear, 73: Third gear, 74: Fourth gear, 75: Fifth gear, 76: Sixth gear, A1: First rotation direction, A2: Second rotation direction

## Claims

1. A leaning vehicle (1), comprising:
a vehicle body frame (10) including a head pipe (11);
a left wheel (3L) arranged leftward relative to the head pipe (11) with regard to a vehicle left-right direction;
a right wheel (3R) arranged rightward relative to the head pipe (11) with regard to the vehicle left-right direction;
a link mechanism (20) that links together the vehicle body frame (10) and the left wheel (3L) and the right wheel (3R); and
a lean motor (30) configured to drive the link mechanism (20) to thereby tilt the vehicle body frame (10), wherein:
the lean motor (30) includes:
a case (31) fixed to the vehicle body frame (10);
a stator (32) fixed to the case (31);
a rotating mechanism (39) including a rotor (33) rotatably supported on the case (31), a rotating shaft (34) that is fixed to the rotor (33) and is configured to rotate together with the rotor (33), and a deceleration mechanism (35) that is configured to transmit rotation of the rotating shaft (34) while reducing speed of rotation; and
an output shaft (36) connected to the deceleration mechanism (35) and the link mechanism (20); and
the leaning vehicle (1) includes a lock mechanism (40) that is configured to restrict rotation of the rotating mechanism (39) to thereby prevent the vehicle body frame (10) from tilting, wherein the lock mechanism (40) is configured to restrict rotation of the rotor (33), **characterized in that** the rotor (33) includes a plurality of recesses (33a) recessed inward in a radial direction of the rotor (33), and a plurality of protrusions (33b) protruding outward in the radial direction of the rotor (33);
the recesses (33a) and the protrusions (33b) are arranged alternating with each other in a circumferential direction of the rotor (33);
the lock mechanism (40) includes a lock lever (41) including a pawl (41a) that can be inserted in the recess (33a) of the rotor (33), and a first support shaft (51) that swingably supports the lock lever (41) on the case (31); and
the lock lever (41) is configured so that the lock lever (41) can swing between a lock position in which the pawl (41a) is inserted in the recess (33a) of the rotor (33) and the pawl (41a) engages with the protrusion (33b), and an unlock position in which the pawl (41a) leaves the recess (33a) of the rotor (33) and the pawl (41a) is no longer in engagement with the protrusion (33b).

2. The leaning vehicle (1) according to claim 1, **characterized in that** the lock mechanism (40) includes a first spring (61) that is configured to urge the lock lever (41) toward the unlock position, and a wire (60) that is configured to pull the lock lever (41) toward the lock position.

3. The leaning vehicle (1) according to claim 2, **characterized in that** the lock mechanism (40) includes a cam lever (42) that engages with the lock lever (41), and a second support shaft (52) that swingably supports the cam lever (42) on the case (31);
a cam groove (41b) is formed on one of the lock lever (41) and the cam lever (42), and a slide pin (42b) slidably inserted in the cam groove (41b) is provided on the other one of the lock lever (41) and the cam lever (42);
the first spring (61) that is configured to urge the cam lever (42) in a first rotation direction (A1) around the second support shaft (52);
the wire (60) is configured to exert a force in a second rotation direction (A2), which is opposite to the first rotation direction (A1), on the cam lever (42) when the wire (60) is pulled; and
the cam groove (41b) and the slide pin (42b) are configured so that a distance from a center position of the first support shaft (51) to a contact position between the cam groove (41b) and the slide pin (42b) decreases as the cam lever (42) rotates in the first rotation direction (A1) and increases as the cam lever (42) rotates in the second rotation direction (A2).

4. The leaning vehicle (1) according to claim 3, **characterized in that** the lock mechanism (40) includes a second spring (62) that is connected to the cam lever (42) and is configured to urge the cam lever (42) in the second rotation direction (A2).

5. The leaning vehicle (1) according to any one of claims 1 to 4, **characterized in that** the deceleration mechanism (35) includes a plurality of gears (71, 72, 73, 74, 75, 76); and
the lock mechanism (40) is configured to restrict rotation of one of the plurality of gears (71, 72, 73, 74, 75, 76).

## Patentansprüche

1. Ein Neigefahrzeug (1), das umfasst:
einen Fahrzeugkörperrahmen (10) , der ein Kopfrohr (11) enthält;
ein linkes Rad (3L), das in Bezug auf die Fahrzeug-Links-Rechts-Richtung links vom Kopfrohr (11) angeordnet ist;
ein rechtes Rad (3R), das relativ zum Kopfrohr (11) in Bezug auf die Fahrzeug-Links-Rechts-Richtung nach rechts angeordnet ist;
einen Lenkermechanismus (20), der den Fahrzeugkörperrahmen (10) und das linke Rad (3L) und das rechte Rad (3R) miteinander verbindet; und
einen Neigungsmotor (30), der so konfiguriert ist, dass er den Lenkermechanismus (20) antreibt, um dadurch den Fahrzeugkörperrahmen (10) zu neigen, wobei:
der Neigungsmotor (30) enthält:
ein Gehäuse (31), das am Fahrzeugkörperrahmen (10) befestigt ist;
einen Stator (32), der am Gehäuse (31) befestigt ist;
einen Drehmechanismus (39), der einen Rotor (33) enthält, der drehbar am Gehäuse (31) gelagert ist, eine Drehwelle (34), die am Rotor (33) befestigt ist und so konfiguriert ist, dass sie sich zusammen mit dem Rotor (33) dreht, und einen Verzögerungsmechanismus (35), der so konfiguriert ist, dass er die Drehung der Drehwelle (34) überträgt und dabei die Drehgeschwindigkeit verringert; und
eine Ausgangswelle (36), die mit dem Verzögerungsmechanismus (35) und dem Lenkermechanismus (20) verbunden ist; und
das Neigefahrzeug (1) enthält einen Verriegelungsmechanismus (40), der so konfiguriert ist, dass er die Drehung des Drehmechanismus (39) einschränkt, um dadurch ein Kippen des Fahrzeugkörperrahmens (10) zu verhindern, wobei der Verriegelungsmechanismus (40) so konfiguriert ist, dass er die Drehung des Rotors (33) einschränkt, **dadurch gekennzeichnet, dass** der Rotor (33) eine Mehrzahl von Aussparungen (33a), die in radialer Richtung des Rotors (33) nach innen vertieft sind, und eine Mehrzahl von Vorsprüngen (33b) enthält, die in radialer Richtung des Rotors (33) nach außen vorstehen;
die Vertiefungen (33a) und die Vorsprünge (33b) in Umfangsrichtung des Rotors (33) abwechselnd zueinander angeordnet sind;
der Verriegelungsmechanismus (40) enthält einen Verriegelungshebel (41) , der eine Klinke (41a) aufweist, die in die Aussparung (33a) des Rotors (33) eingeführt werden kann, und eine erste Lagerwelle (51), die den Verriegelungshebel (41) schwenkbar am Gehäuse (31) lagert; und
der Verriegelungshebel (41) so konfiguriert ist, dass der Verriegelungshebel (41) zwischen einer Verriegelungsposition, in der die Klinke (41a) in die Aussparung (33a) des Rotors (33) eingeführt ist und die Klinke (41a) mit dem Vorsprung (33b) in Eingriff steht, und einer Entriegelungsposition, in der die Klinke (41a) die Aussparung (33a) des Rotors (33) verlässt und die Klinke (41a) nicht mehr mit dem Vorsprung (33b) in Eingriff steht.

2. Das Neigefahrzeug (1) gemäß Anspruch 1, **dadurch gekennzeichnet, dass** der Verriegelungsmechanismus (40) eine erste Feder (61) enthält, die so konfiguriert ist, dass sie den Verriegelungshebel (41) in Richtung der Entriegelungsposition drückt, und einen Kabel (60), das so konfiguriert ist, dass es den Verriegelungshebel (41) in Richtung der Verriegelungsposition zieht.

3. Das Neigefahrzeug (1) gemäß Anspruch 2, **dadurch gekennzeichnet, dass** der Verriegelungsmechanismus (40) einen Nockenhebel (42), der mit dem Verriegelungshebel (41) in Eingriff steht, und eine zweite Lagerwelle (52) enthält, die den Nockenhebel (42) schwenkbar am Gehäuse (31) lagert;
eine Nockennut (41b) an einem der Elemente Verriegelungshebel (41) und Nockenhebel (42) ausgebildet ist und ein Gleitstift (42b), der gleitend in die Nockennut (41b) eingeführt ist, an dem anderen der Elemente Verriegelungshebel (41) und Nockenhebel (42) vorgesehen ist;
die erste Feder (61), die so konfiguriert ist, dass sie den Nockenhebel (42) in einer ersten Drehrichtung (A1) um die zweite Lagerwelle (52) drückt;
das Kabel (60) ist so konfiguriert, dass es eine Kraft in einer zweiten Drehrichtung (A2), die der ersten Drehrichtung (A1) entgegengesetzt ist, auf den Nockenhebel (42) ausübt, wenn das Kabel (60) gezogen wird; und
die Nockennut (41b) und der Gleitstift (42b) sind so konfiguriert, dass ein Abstand von einer Mittelposition der ersten Lagerwelle (51) zu einer Kontaktposition zwischen der Nockennut (41b) und dem Gleitstift (42b) abnimmt, wenn sich der Nockenhebel (42) in der ersten Drehrichtung (A1) dreht, und zunimmt, wenn sich der Nockenhebel (42) in der zweiten Drehrichtung (A2) dreht.

4. Das Neigefahrzeug (1) gemäß Anspruch 3, **dadurch gekennzeichnet, dass** der Verriegelungsmechanismus (40) eine zweite Feder (62) enthält, die mit dem Nockenhebel (42) verbunden ist und so konfiguriert ist, dass sie den Nockenhebel (42) in die zweite Drehrichtung (A2) drückt.

5. Das Neigefahrzeug (1) gemäß irgendeinem der Ansprüche 1 bis 4, **dadurch gekennzeichnet, dass** der Verzögerungsmechanismus (35) eine Mehrzahl von Zahnrädern (71, 72, 73, 74, 75, 76) enthält; und
der Verriegelungsmechanismus (40) so konfiguriert ist, dass er die Drehung eines der Mehrzahl von Zahnrädern (71, 72, 73, 74, 75, 76) einschränkt.

## Revendications

1. Véhicule inclinable (1), comprenant :
un châssis de carrosserie de véhicule (10) incluant un tube de direction (11) ;
une roue gauche (3L) agencée vers la gauche par rapport au tube de direction (11) par rapport à une direction gauche-droite du véhicule ;
une roue droite (3R) agencée vers la droite par rapport au tube de direction (11) par rapport à la direction gauche-droite du véhicule ;
un mécanisme de liaison (20) qui relie le châssis de carrosserie de véhicule (10) à la roue gauche (3L) et à la roue droite (3R) ; et
un moteur d'inclinaison (30) configuré pour entraîner le mécanisme de liaison (20) pour incliner ainsi le châssis de carrosserie de véhicule (10), dans lequel :
le moteur d'inclinaison (30) inclut :
un carter (31) fixé au châssis de carrosserie de véhicule (10) ;
un stator (32) fixé au carter (31) ;
un mécanisme de rotation (39) incluant un rotor (33) supporté de manière rotative au carter (31), un arbre rotatif (34) fixé au rotor (33) et configuré pour tourner avec le rotor (33), et un mécanisme de décélération (35) configuré pour transmettre la rotation de l'arbre rotatif (34) tout en réduisant la vitesse de rotation ; et
un arbre de sortie (36) connecté au mécanisme de décélération (35) et au mécanisme de liaison (20) ; et
le véhicule inclinable (1) inclut un mécanisme de verrouillage (40) qui est configuré pour restreindre la rotation du mécanisme de rotation (39) pour empêcher ainsi le châssis de carrosserie de véhicule (10) de basculer, dans lequel le mécanisme de verrouillage (40) est configuré pour restreindre la rotation du rotor (33), **caractérisé en ce que** le rotor (33) inclut une pluralité d'évidements (33a) encastrés vers l'intérieur dans une direction radiale du rotor (33), et une pluralité de protubérances (33b) faisant saillie vers l'extérieur dans la direction radiale du rotor (33) ;
les évidements (33a) et les protubérances (33b) sont agencés en alternance les uns avec les autres dans une direction circonférentielle du rotor (33) ;
le mécanisme de verrouillage (40) inclut un levier de verrouillage (41) incluant un cliquet (41a) qui peut être inséré dans l'évidement (33a) du rotor (33), et un premier arbre de support (51) qui supporte de manière pivotante le levier de verrouillage (41) sur le carter (31) ; et
le levier de verrouillage (41) est configuré de manière à pouvoir pivoter entre une position de verrouillage dans laquelle le cliquet (41a) est inséré dans l'évidement (33a) du rotor (33) et le cliquet (41a) est en prise avec la protubérance (33b), et une position de déverrouillage dans laquelle le cliquet (41a) quitte le l'évidement (33a) du rotor (33) et le cliquet (41a) n'est plus en prise avec la protubérance (33b).

2. Véhicule inclinable (1) selon la revendication 1, **caractérisé en ce que** le mécanisme de verrouillage (40) inclut un premier ressort (61) qui est configuré pour pousser le levier de verrouillage (41) vers la position de déverrouillage, et un fil (60) qui est configuré pour tirer le levier de verrouillage (41) vers la position de verrouillage.

3. Véhicule inclinable (1) selon la revendication 2, **caractérisé en ce que** le mécanisme de verrouillage (40) inclut un levier à came (42) qui s'engage avec le levier de verrouillage (41), et un deuxième arbre de support (52) qui supporte de manière pivotante le levier à came (42) sur le carter (31) ;
une rainure de came (41b) est formée sur l'un du levier de verrouillage (41) et du levier à came (42), et une goupille de glissement (42b) insérée de manière coulissante dans la rainure de came (41b) est prévue sur l'autre du levier de verrouillage (41) et du levier à came (42) ;
le premier ressort (61) qui est configuré pour pousser le levier à came (42) dans un premier sens de rotation (A1) autour du deuxième arbre de support (52) ;
le fil (60) est configuré pour exercer une force dans un deuxième sens de rotation (A2), opposé au premier sens de rotation (A1), sur le levier à came (42) lorsque le fil (60) est tiré ; et
la rainure de came (41b) et la goupille de glissement (42b) sont configurées de telle sorte qu'une distance entre une position centrale du premier arbre de support (51) et une position de contact entre la rainure de came (41b) et la goupille de glissement (42b) diminue lorsque le levier à came (42) tourne dans le premier sens de rotation (A1) et augmente lorsque le levier à came (42) tourne dans le deuxième sens de rotation (A2).

4. Véhicule inclinable (1) selon la revendication 3, **caractérisé en ce que** le mécanisme de verrouillage (40) inclut un deuxième ressort (62) qui est connecté au levier à came (42) et est configuré pour pousser le levier à came (42) dans le deuxième sens de rotation (A2).

5. Véhicule inclinable (1) selon l'une quelconque des revendications 1 à 4, **caractérisé en ce que** le mécanisme de décélération (35) inclut une pluralité d'engrenages (71, 72, 73, 74, 75, 76) ; et
le mécanisme de verrouillage (40) est configuré pour restreindre la rotation de l'un de la pluralité d'engrenages (71, 72, 73, 74, 75, 76).
